Europäisches Patentamt

European Patent Office

Office européen des brevets

(19)

(11) Numéro de publication : **0 461 953 A2**

(12) # DEMANDE DE BREVET EUROPEEN

(21) Numéro de dépôt : **91401445.1**

(22) Date de dépôt : **04.06.91**

(51) Int. Cl.⁵ : **G01N 21/47**, G01N 1/14, B60R 16/02

(30) Priorité : **15.06.90 FR 9007484**

(43) Date de publication de la demande : **18.12.91 Bulletin 91/51**

(84) Etats contractants désignés : **AT BE CH DE GB IT LI NL SE**

(71) Demandeur : **INSTITUT NATIONAL DE RECHERCHE SUR LES TRANSPORTS ET LEUR SECURITE**
**2, avenue du Général Malleret-Joinville**
**F-94110 Arcueil (FR)**
Demandeur : **SOCIETE DES AUTOROUTES PARIS-RHIN-RHONE**
**36, rue du Dr Schmitt**
**F-21850 Saint Apollinaire (FR)**

(72) Inventeur : **Clerc, Alain**
**38, rue de la Gare**
**F-94110 Arcueil (FR)**

(74) Mandataire : **Flavenot, Bernard**
**Société ABRITT 17, rue du Docteur Charcot La Norville**
**F-91290 Arpajon (FR)**

(54) Perfectionnement à un dispositif d'analyse de l'état de surface d'un sol, pour mobile apte à prendre contact avec ce sol.

(57)     La présente invention concerne les dispositifs permettant d'analyser l'état de surface d'un sol, à partir d'un mobile se déplaçant par rapport à ce sol.

Le dispositif selon l'invention se caractérise essentiellement par le fait qu'il comprend des moyens source (10) pour émettre un faisceau (11) de rayonnement de type électromagnétique vers un point (13) de la surface du sol, des moyens de réception (14) aptes à recevoir un faisceau (35,37) du même type et aptes à délivrer des signaux représentatifs du faisceau reçu réfléchi (35) sur le point, des moyens de traitement (60) de ces signaux, et des moyens pour asservir (20) les moyens source en fonction de la vitesse de déplacement du mobile de façon que, sur au moins une portion de ce déplacement, la tache (13) que fait le faisceau sur le sol ait une vitesse sensiblement nulle par rapport au sol.

Application : analyse de l'état de surface d'une voie de circulation à partir d'un véhicule, pour discriminer les sols secs, humides, verglacés, etc.

EP 0 461 953 A2

fig. 2

La présente invention concerne les perfectionnements aux dispositifs aptes à être montés sur des mobiles tels que des véhicules routiers et permettants d'analyser l'état de surface du sol sur lequel ces mobiles sont amenés à se déplacer.

Un nombre toujours croissant de véhicules circule sur les routes, en tous lieux et par tous les temps, ce qui entraîne d'importants risques d'accidents. Devant ce fait, certains responsables ont pensé à réaliser tout un réseau d'informations pour relier le maximum de ces véhicules entre eux afin, d'une part, de mettre les conducteurs en connaissance de certains paramètres leur permettant d'adapter la qualité de leur conduite et, d'autre part, de pouvoir utiliser les véhicules eux-mêmes comme capteurs mobiles capables d'appréhender certains de ces paramètres. C'est ainsi, par exemple, que l'on a déjà réalisé des détecteurs de choc qui émettent des signaux hertziens lorsque le véhicule qu'ils équipent a été accidenté. Ce détecteur prévient alors les conducteurs des autres véhicules se dirigeant vers le lieu de l'accident, qui peuvent ainsi prendre toutes précautions utiles pour éviter, par exemple, de s'impliquer dans un autre accident. En effet, dans ce cas, la voie est généralement très encombrée et il y a donc un intérêt à ralentir et même, éventuellement, à changer d'itinéraire.

Dans cet objectif, l'un des paramètres qu'il est important de connaître est l'état de surface du sol, notamment pour savoir si le sol est sec, mouillé, verglacé, enneigé, etc, afin de pouvoir en déduire tout un ensemble d'informations contribuant à assurer de bonnes conditions de circulation sur une aire donnée. Plus particulièrement, il est important de pouvoir déterminer les endroits des routes qui sont verglacés car cet état est, en hiver, une cause prédominante d'accidents.

C'est ainsi que le Demandeur a déjà réalisé un dispositif d'analyse de l'état de surface d'un sol, pour mobile apte à prendre contact avec ce sol par au moins un point, comprenant notamment une source de faisceaux lumineux solidarisée avec le mobile de façon à diriger les faisceaux vers un point de la surface du sol, un récepteur de faisceaux lumineux apte à délivrer des signaux représentatifs des faisceaux reçus, le récepteur étant solidarisé avec le mobile de façon à diriger son axe de réception sensiblement sur le point de la surface du sol, et des moyens de traitement des signaux émis par le récepteur, ces moyens étant du type microprocesseur programmé, par exemple, pour analyser la qualité de l'image reçue par le récepteur et discriminer les différentes natures possibles du sol, afin de savoir si le sol est sec, mouillé, enneigé, verglacé, etc.

La présente invention a pour but de réaliser un perfectionnement au dispositif décrit ci-dessus pour lui permettre de discriminer avec encore plus de précision et de certitude les différents états possibles de la surface du sol sur lequel se déplace un mobile comportant ce dispositif.

Plus précisément, la présente invention a pour objet un dispositif d'analyse de l'état de surface d'un sol, pour mobile apte à prendre contact avec ledit sol par au moins un point, comprenant des moyens source pour émettre un faisceau de rayonnement de type électromagnétique vers un point de ladite surface, des moyens de réception aptes à recevoir un faisceau du même type et aptes à délivrer des signaux représentatifs du faisceau reçu réfléchi sur ledit point, et des moyens de traitement desdits signaux, caractérisé par le fait qu'il comprend en outre des moyens pour asservir lesdits moyens source en fonction de la vitesse de déplacement dudit mobile de façon que, sur au moins une portion dudit déplacement, la tache que fait, sur le sol, ledit faisceau émis par les moyens source ait une vitesse sensiblement nulle par rapport audit sol.

D'autres caractéristiques et avantages de la présente invention apparaîtront au cours de la description suivante donnée en regard des dessins annexés à titre illustratif mais nullement limitatif dans lesquels :

La figure 1 représente un schéma de principe d'un mode de réalisation d'un dispositif selon l'art antérieur en application à l'équipement d'un véhicule du type automobile, et

La figure 2 représente un mode de réalisation du détail du perfectionnement de l'invention, pour un dispositif selon la figure 1.

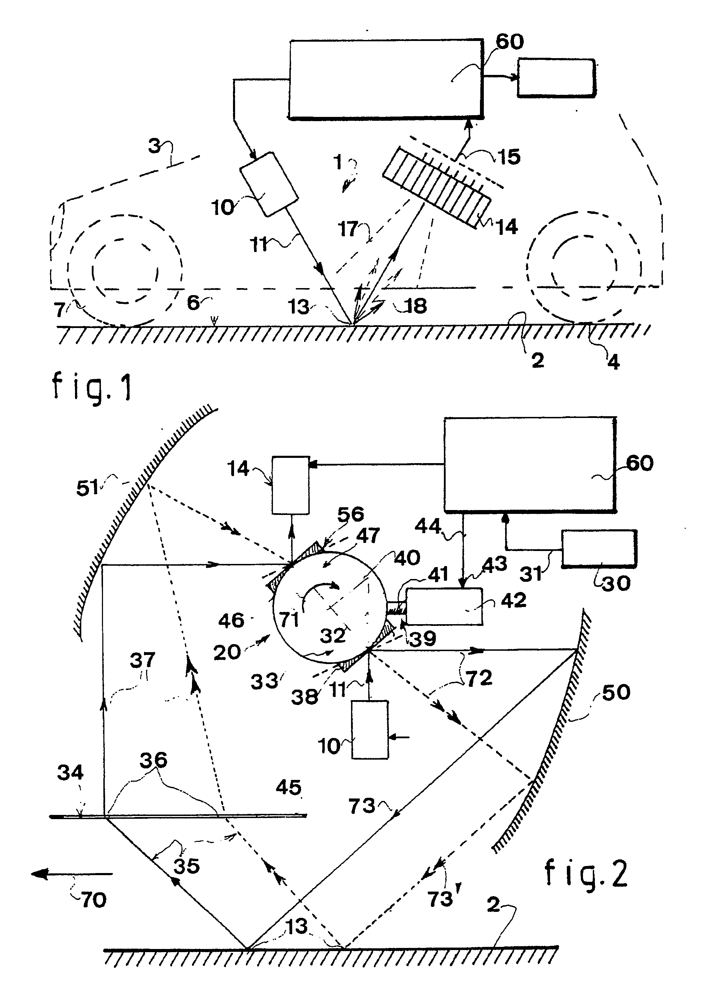

La figure 1 représente le schéma d'un mode de réalisation d'un dispositif 1 permettant d'analyser l'état de surface d'un sol 2, pour mobile 3 apte à prendre contact avec ce sol par au moins un point 4, par exemple un véhicule automobile roulant sur une route 6, les points de contact étant alors ceux qui sont communs aux pneumatiques 7 et à la route 6, ledit dispositif étant celui qui a déjà été réalisé par le Demandeur.

Le dispositif 1 comprend une source (ou une pluralité de sources) 10 d'un faisceau 11 de rayonnement de type électromagnétique. La source 10 est solidarisée au mobile 3, par exemple sur le châssis au moyen d'une patte, de façon à diriger le faisceau qu'elle émet vers un point 13 de la surface de la route 6. Le dispositif comporte aussi un récepteur 14 (ou une pluralité de récepteurs) apte à revevoir des faisceaux de même type que le faisceau émis par la source 10 et choisi pour pouvoir délivrer à sa sortie 15 des signaux, par exemple de type électrique, représentatifs des faisceaux qu'il reçoit. Ce récepteur 14 est lui aussi solidarisé au véhicule, par exemple au moyen d'une patte de fixation, de façon à diriger l'axe de son champ de réception 17 sensiblement sur le point 13 de la surface de la route 6, pour pouvoir capter au moins une partie 18 du faisceau réfléchi sur la surface du sol en ce point. La sortie 15 du récepteur 14 est connectée à une entrée d'un organe de traitement 60 des signaux délivrés afin de pouvoir les analyser, les comparer, etc., pour en déduire, comme il sera explicité ci-après, l'état de surface de la route.

Dans un mode de réalisation avantageux, l'organe de traitement est constitué par un microprocesseur ayant une programmation adaptée, comme explicité ci-après.

Le dispositif connu décrit ci-dessus, fonctionne de la façon suivante, étant d'abord précisé que ce fonctionnement sera décrit dans le cas d'un dispositif monté sur un véhicule automobile roulant sur une route couramment empruntée par de tels véhicules et dont la surface du sol est constituée d'un revêtement goudronné, le dispositif utilisant un rayonnement optique, par exemple dans le domaine du visible.

Si l'on considère que le véhicule roule sur cette route quand sa surface est sèche et non recouverte de gravillons, le faisceau 11 émis par la source 10 est presque totalement absorbé par le revêtement et le récepteur 14 ne reçoit donc aucun faisceau puisque la surface ne réfléchit pas. L'absence de signal à la sortie 15 du récepteur 14 est analysée par l'organe de traitement 60 qui, à sa sortie, définit l'état du sol 2 comme celui d'un sol sec.

Dans le cas où le sol sec est recouvert, par exemple, de gravillons, le récepteur 14 reçoit en retour le faisceau engendré par la réflexion et/ou diffraction, sur ces gravillons, du faisceau émis par la source 10 et délivre un signal qui peut être facilement interprété par le microprocesseur comme représentatif de la présence de gravillons sur le revêtement de la route.

Si la route est mouillée, le récepteur reçoit un faisceau dû à la diffraction sur les projections de gouttes d'eau produites au-dessus du sol par le pneumatique roulant sur cette route mouillée. De plus, la surface au point 13 est recouverte d'eau, et cette eau se comporte presque comme une surface réfléchissante. Le récepteur 14 reçoit alors un faisceau relativement large avec un point de concentration lumineuse. Les signaux délivrés à la sortie du récepteur 14 sont analysés par l'organe de traitement 60 qui informe que la surface du sol est mouillée.

Si le sol est verglacé, la surface au point 13 se comporte comme une pluralité de surfaces réfléchissantes dans une répartition aléatoire due à la nature cristalline du verglas. Le récepteur 14 reçoit alors une pluralité de faisceaux répartis dans un volume relativement grand et la surface du récepteur impressionnée est large, ce qui permet de discriminer le cas d'un sol mouillé de celui d'un sol verglacé.

Il est, bien entendu, possible de déterminer d'autres états de surface du sol, par exemple une surface de sol recouverte de neige. En effet, la neige produit beaucoup plus de diffraction que l'eau, et presque autant que le verglas.

Le dispositif décrit ci-dessus permet d'analyser avec une assez bonne précision les différents états de surface possibles des routes couramment empruntées par les véhicules automobiles.

Le programme de l'organe de traitement 60, quant à lui, est élaboré par un homme de l'art connaissant les données explicitées ci-dessus et il n'est pas besoin de développer ici ce point-là. Le Demandeur en a d'ailleurs déjà élaboré un qu'il a mis à la disposition du public.

Cependant, dans le but, notamment, de simplifier le programme de l'organe 60, le Demandeur apporte au dispositif décrit ci-dessus, qui représente l'art antérieur, un perfectionnement dont un mode de réalisation préféré est représenté sur la figure 2.

Par ce perfectionnement, le dispositif 1 d'analyse de l'état de surface d'un sol 2 comprend en outre, comme illustré sur la figure 2, des moyens 20 pour asservir la source 10, et plus particulièrement la direction du faisceau 11 émis par cette source, en fonction de la vitesse de déplacement du véhicule 3 de façon que, sur au moins une portion du déplacement du véhicule, la tache que fait le faisceau 11 sur le sol 2 ait une vitesse sensiblement nulle par rapport au sol. En d'autres termes, l'asservissement de la source 10 permet à la tache lumineuse de rester sensiblement immobile sur le sol pendant un certain temps, malgré que le véhicule continue d'avancer.

Le fait que cette tache reste immobile sur le sol permet corrélativement, pendant ce temps, de maintenir stable l'image qu'elle donne sur le récepteur 14. Cette stabilité augmente donc le temps offert au microprocesseur pour effectuer une analyse plus précise et fiable des signaux qui lui sont fournis par ce récepteur. Ce microprocesseur n'a ainsi pas besoin d'être très performant car sa rapidité à traiter les signaux n'est pas indispensable, ce qui contribue à une réduction du coût de revient du dispositif puisque le prix d'un matériel électronique augmente considérablement avec la vitesse de son temps de réponse.

Les moyens 20 pour asservir les moyens source 10 en fonction de la vitesse de déplacement du mobile de façon que, sur au moins une portion du déplacement de celui-ci, la tache que fait le faisceau 11 sur le sol ait une vitesse sensiblement nulle par rapport audit sol, peuvent être mis en oeuvre de différentes façons, mécaniques, électromagnétiques, etc. Ils peuvent cependant être très avantageusement réalisés comme illustré sur la figure 2.

Ces moyens comportent par exemple un détecteur 30 de la vitesse du véhicule 3 délivrant à sa sortie 31 un signal fonction de cette vitesse et d'une nature lui permettant d'être analysé et interprété par le microprocesseur 60. La source 10, par exemple constituée par un générateur laser, est solidaire du véhicule et apte à émettre un faisceau lumineux 11 suivant un axe optique 32 fixe par rapport au véhicule 3. Dans ce cas, les moyens d'asservissement 20 comportent en outre des moyens 33 pour dévier le faisceau lumineux 11 de façon que la tache 13 qu'il forme sur le sol 2 reste, pendant au moins un temps d'une durée déterminée du déplacement du véhicule, immobile par rapport au sol 2, et le dispositif 1 comporte en outre des moyens 34 pour recevoir le faisceau réfléchi 35 sur le point 13 et former une image 36 de ce faisceau réfléchi, et des moyens 56 pour envoyer le faisceau lumineux 37 émis par l'image 36 vers les moyens de réception 14.

Dans un mode de réalisation avantageux, les moyens 33 pour dévier le faisceau lumineux 11 comportent un premier miroir 38 situé sur l'axe optique d'émission 32 de ce faisceau et des moyens 39 pour commander la rotation de ce miroir autour d'un axe non confondu avec l'axe optique du faisceau émis par la source. Ces moyens 39 sont par exemple constitués par un tambour 40 solidaire de l'arbre 41 d'un moteur 42 dont l'entrée de commande 43 est reliée à la sortie d'ordre 44 de l'organe de traitement 60.

Quant aux moyens 34 pour recevoir le faisceau 35 réfléchi sur le point 13 et former une image 36 de ce faisceau réfléchi, ils comportent un diffuseur de faisceau 45, par exemple un dépoli, solidaire du véhicule 3. Dans ce cas, les moyens 56 pour envoyer le faisceau lumineux 37 émis par l'image 36 vers les moyens de réception 14 comprennent au moins un second miroir 46 situé sur l'axe optique du faisceau émis par l'image 36 et des moyens 47 pour commander la rotation du second miroir 46 en corrélation avec la rotation du premier miroir 38.

Dans un mode avantageux, ces moyens 47 sont couplés avec les moyens 39 décrits ci-dessus c'est-à-dire le tambour 40, l'arbre 41 et le moteur 42. De cette façon, en commandant la rotation du seul moteur 42 en fonction de la vitesse du véhicule, on obtient la commande simultanée de la rotation des deux miroirs d'émission 38 et de réception 46, ce qui permet une réalisation peu onéreuse avec la certitude d'une bonne synchronisation de l'émission et de la réception des faisceaux.

Il est bien entendu nécessaire de concentrer l'ensemble des éléments constitutifs d'un tel dispositif, ne serait-ce que pour minimiser son encombrement. Dans ce but, les trajets optiques sont réduits au maximum, au moyen par exemple de miroirs de renvoi 50, 51 situés sur le trajet des faisceaux incidents déviés 11 et des faisceaux réfléchis 35. Ces miroirs 50, 51 sont avantageusement constitués par des miroirs du type parabolique comme ceux qui sont illustrés sur la figure 2.

Comme dans le dispositif selon l'art antérieur, les moyens de réception 14 sont constitués par une caméra à contrôle de charges connue sous la dénomination C.C.D.

Le fonctionnement général du dispositif étant connu en lui-même, il ne sera pas rappelé ici. Par contre, le perfectionnement décrit ci-dessus et illustré sur la figure 2, fonctionne de la façon suivante :

Le générateur laser émet le faisceau 11 qui a une direction fixe par rapport au véhicule et tombe sur le miroir 38. Ce miroir donne naissance à un faisceau réfléchi 72 dirigé vers le miroir 50 qui le défléchit suivant le faisceau 73 vers le point 13 du sol 2.

Il est précisé que, pour la description de ce fonctionnement, le véhicule se déplace dans le sens défini par la flèche 70 et que le tambour est animé d'un mouvement de rotation suivant la flèche 70. De cette façon, quand le miroir 38 subit cette rotation, le faisceau réfléchi 72 subit une déviation dextrorsum amplifiée par le miroir parabolique 50, déviation qui déplace en 73' le faisceau défléchi 73 dans un mouvement de retrait par rapport au sens de déplacement 70 du véhicule. Si la rotation du moteur 42 est asservie à la vitesse de déplacement du véhicule 3, le point d'impact, sur le sol, du faisceau 73' va se trouver, du fait du déplacement du véhicule, au même endroit que celui du faisceau 73. Dans ces conditions et selon le but de la présente invention, pendant un temps d'une durée déterminée du déplacement du véhicule 3, le point d'impact 13 du faisceau 73 va rester immobile par rapport au sol 2.

Le faisceau 35 réfléchi sur le point 13 rencontre le diffuseur 45 qui, de façon connue en Optique, en donne une image 36. Du fait du déplacement du véhicule, et donc du diffuseur, cette image 36 se déplace dans un mouvement relatif de recul par rapport au déplacement du véhicule. L'image formée sur le diffuseur se déplace donc suivant un trajet déterminé fonction de la durée pendant laquelle le point lumineux 13 reste fixe sur le sol 2.

Grâce au miroir 51 du type parabolique, le faisceau 37 émis par cette image 36 est focalisé et envoyé à l'entrée du récepteur 14 via le miroir tournant 46 qui est animé du même mouvement de rotation que le miroir de déflexion 38, permettant ainsi de compenser le déplacement relatif de l'image 36 produite sur le diffuseur, et donc d'obtenir toujours la focalisation des faisceaux qu'elle émet, sur l'entrée du récepteur 14 qui peut ainsi être fixe par rapport au véhicule 3.

## Revendications

1. Dispositif d'analyse de l'état de surface d'un sol (2), pour mobile (3) apte à prendre contact avec ledit sol par au moins un point (4), comprenant des moyens source (10) pour émettre un faisceau (11) de rayonnement de type électromagnétique vers un point (13) de ladite surface, des moyens de réception (14) aptes à recevoir un faisceau (18) du même type et aptes à délivrer (15) des signaux représentatifs du faisceau reçu réfléchi sur ledit point, et des moyens de traitement (60) desdits signaux, caractérisé par le fait qu'il comprend en outre des moyens pour asservir (20) lesdits moyens source en fonction de la vitesse de déplacement dudit mobile de façon que, sur au moins une portion dudit déplacement, la tache (13) que fait ledit faisceau sur le sol ait une vitesse sensiblement nulle par rapport audit sol.

2. Dispositif selon la revendication 1, caractérisé par le fait que lesdits moyens source (10) comportent une source de faisceaux lumineux solidaire dudit mobile et apte à émettre lesdits faisceaux (11) suivant un axe optique (32) fixe par rapport audit mobile, que lesdits moyens d'asservissement (20) comportent des moyens (33) pour dévier lesdits faisceaux lumineux émis par ladite source de façon que la tache (13) qu'ils forment sur le sol (2) reste, pendant au moins un temps d'une durée déterminée du déplacement dudit véhicule, immobile par rapport audit sol, et qu'il comporte en outre des moyens (34) pour recevoir les faisceaux réfléchis (35) sur ledit point et former une image (36) de ces faisceaux réfléchis et des moyens (56) pour envoyer les faisceaux (37) émis par ladite image, vers lesdits moyens de réception (14).

3. Dispositif selon la revendication 2, caractérisé par le fait que lesdits moyens (33) pour dévier lesdits faisceaux lumineux (11) émis par ladite source (10) de façon que la tache qu'ils forment sur le sol reste, pendant au moins un temps d'une durée déterminée du déplacement dudit mobile, immobile par rapport audit sol comportent au moins un premier miroir (38) situé sur l'axe optique d'émission (32) desdits faisceaux et des moyens (39) pour commander la rotation dudit premier miroir autour d'un axe non confondu avec ledit axe optique d'émission desdits faisceaux.

4. Dispositif selon l'une des revendications 2 et 3, caractérisé par le fait que lesdits moyens (34) pour recevoir les faisceaux réfléchis (35) sur ledit point (13) et former une image (36) de ces faisceaux réfléchis comportent un diffuseur de faisceaux (45) solidaire dudit mobile.

5. Dispositif selon l'une des revendications 2 à 4, caractérisé par le fait que lesdits moyens (56) pour envoyer les faisceaux lumineux (37) émis par ladite image (36), vers lesdits moyens de réception (14), comportent au moins un second miroir (46) situé sur l'axe optique des faisceaux émis par ladite image et des moyens (47) pour commander la rotation dudit second miroir en corrélation avec la rotation dudit premier miroir (38).

6. Dispositif selon l'une des revendications 2 à 5, caractérisé par le fait que lesdits moyens de réception (14) sont constitués par une caméra à contrôle de charges (CCD).

fig.1

fig.2